# EUROPEAN PATENT APPLICATION

(11) **EP 4 560 900 A1**
(43) Date of publication of application: **28.05.2025**
(21) Application number: 24212707.4
(22) Date of filing: 13.11.2024
(51) Int. Cl.: H02K 15/038, H02K 1/276

(54) **MAGNETIC ALIGNMENT SYSTEMS AND METHODS FOR PERMANENT MAGNET MOTORS**

(30) Priority: 21.11.2023 US 202318516794
(71) Applicant: ABB SCHWEIZ AG, 5400 Baden (CH)
(72) Inventor: TREMELLING, Darren, 5400 Baden (CH); EAKINS, Will, 5400 Baden (CH); WHITE, Christian, 5400 Baden (CH); ZHONG, Sheng, 5400 Baden (CH); PERIGO, Elio, 5400 Baden (CH)
(74) Representative: Zimmermann & Partner Patentanwälte mbB

(57) **Abstract**

A system for manufacturing a rotor for a permanent magnet (PM) motor is provided. The system includes a mold configured to receive a rotor body including a plurality of rotor teeth and defining one or more rotor cavities and a plurality of electromagnetic coils including a plurality of magnetic cores, each of the plurality of magnetic cores configured to align with a respective one of the plurality of rotor teeth, and a plurality of electromagnetic windings. The system further includes a controller configured to, after the rotor body is positioned within the mold, close the mold, after closing the mold, excite the plurality of electromagnetic coils, inject a magnetic material into the one or more rotor cavities, wherein the excited electromagnetic coils align the magnetic material into a desired magnetic orientation prior to solidification of the magnetic material, de-energize the plurality of electromagnetic coils.

## Description

### BACKGROUND

The field of the disclosure relates generally to permanent magnet (PM) motors, and more particularly, the manufacture of PM motors using injection molding.

A PM motor is a type of electric motor that uses permanent magnets to provide a magnetic field, which may interact with one or more windings to produce motion. With respect to manufacturing PM motors, known systems and methods are disadvantaged in some aspects in meeting the needs of PM motor manufacturers and improvements are desired.

### BRIEF DESCRIPTION

In one aspect, a system for manufacturing a rotor for a permanent magnet (PM) motor is provided. The system includes a mold configured to receive a rotor body including a plurality of rotor teeth and defining one or more rotor cavities. The system further includes a plurality of electromagnetic coils including a plurality of magnetic cores, each of the plurality of magnetic cores configured to align with a respective one of the plurality of rotor teeth, and a plurality of electromagnetic windings, wherein each of the electromagnetic windings is wound about at least one of the plurality of magnetic cores. The system further includes a controller configured to, after the rotor body is positioned within the mold, close the mold, after closing the mold, excite the plurality of electromagnetic coils, after exciting the plurality of electromagnetic coils, inject a magnetic material into the one or more rotor cavities, wherein the excited electromagnetic coils align the magnetic material into a desired magnetic orientation prior to solidification of the magnetic material, and after injecting the magnetic material, de-energize the plurality of electromagnetic coils.

In another aspect, a method for manufacturing a rotor for a PM motor is provided. The method is performed using a system including a mold configured to receive a rotor body including a plurality of rotor teeth and defining one or more rotor cavities and a plurality of electromagnetic coils including a plurality of magnetic cores, each of the plurality of magnetic cores configured to align with a respective one of the plurality of rotor teeth, and a plurality of electromagnetic windings, wherein each of the electromagnetic windings is wound about at least one of the plurality of magnetic cores. The method includes after the rotor body is positioned within the mold, closing the mold, after closing the mold, exciting the plurality of electromagnetic coils, after exciting the plurality of electromagnetic coils, injecting a magnetic material into the one or more rotor cavities, wherein the excited electromagnetic coils align the magnetic material into a desired magnetic orientation prior to solidification of the magnetic material, and after injecting the magnetic material, de-energizing the plurality of electromagnetic coils.

In another aspect, a controller for manufacturing a rotor for a PM motor is provided. The controller is in communication with a mold configured to receive a rotor body including a plurality of rotor teeth and defining one or more rotor cavities and a plurality of electromagnetic coils including a plurality of magnetic cores, each of the plurality of magnetic cores configured to align with a respective one of the plurality of rotor teeth, and a plurality of electromagnetic windings, wherein each of the electromagnetic windings is wound about at least one of the plurality of magnetic cores. The controller is configured to after the rotor body is positioned within the mold, close the mold, after closing the mold, excite the plurality of electromagnetic coils, after exciting the plurality of electromagnetic coils, inject a magnetic material into the one or more rotor cavities, wherein the excited electromagnetic coils align the magnetic material into a desired magnetic orientation prior to solidification of the magnetic material, and after injecting the magnetic material, de-energize the plurality of electromagnetic coils.

### BRIEF DESCRIPTION OF THE DRAWINGS

FIG. 1 is a perspective view of an example system for manufacturing a PM motor.
FIG. 2 is a perspective view of an example electromagnetic coil for use in the system shown in FIG. 1.
FIG. 3 is a cross-sectional view of the example electromagnetic coil shown in FIG. 2 taken along cross-sectional line 3-3 shown in FIG. 2.
FIG. 4 is a perspective view of another example electromagnetic coil for use in the system shown in FIG. 1.
FIG. 5 is a flow chart illustrating an example method for manufacturing a PM motor.

### DETAILED DESCRIPTION

Example embodiments of the present disclosure include a system and corresponding method for manufacturing a permanent magnet (PM) motor. Manufacturing of PM electrical machines traditionally utilizes discrete magnets. Challenges involved in the manufacturing chain include a need for inventory control of parts of distinct dimensions and a need of gluing magnets in the rotor, resulting in a curing step of the part. Therefore, a process that enables the in-situ manufacturing of PMs directly in rotor cavities of the PM motor provides technical and economic advantages.

In example embodiments, the system includes a mold configured to receive a rotor body including a plurality of rotor teeth and defining one or more rotor cavities that can be filled with a magnetic material, such as a polymer with embedded magnetic particles. The system further includes a plurality of electromagnetic coils including a plurality of magnetic cores that align with a respective one of the plurality of rotor teeth, and a plurality of electromagnetic windings that are each wound about at least one of the plurality of magnetic cores, such that a desired magnetic filed pattern can be produced when current is supplied to the electromagnetic windings.

After the rotor body is positioned within the mold, the mold is closed, the electromagnetic coils are excited, after which the magnetic material is injected into the rotor cavities. The excited electromagnetic coils align the magnetic material into a desired magnetic orientation prior to solidification of the magnetic material. The electromagnetic coils are then de-energized after the magnetic material has sufficiently solidified, producing a PM rotor structure having the desired magnetic orientation for use in a PM motor.

Accordingly, system and method described herein provides a number of benefits over known systems and methods for manufacturing PM motors. One benefit is that an automated and simultaneous insertion of magnets in cavities reduces manufacturing time, reduces a chance of human error (e.g., with magnetic orientation), and eliminates a need of adhesives and the associated curing time. Another benefit is a simplification of supply chain, in that pellets (raw material for injection molding of numerous frame sizes) may be used instead of discrete magnets of distinct dimensions. Another benefit is flexibility of material selection, in that a change from one magnetic compound to a different one does not require any physical modification to the mold tooling. Another benefit is an ability to fully automate the process with no need for post-treatment, such as magnetization. Another benefit is modularity, in that a mold may be configured to accommodate rotors having different numbers of poles or different sizes of the rotor by adjusting the mold and/or the number of electromagnetic coils installed around the mold accordingly. Additionally, in some embodiments, the rotor may be assembled onto the shaft for (full/partial) injection of the magnetic material, which reduces a need for post-treatment handling.

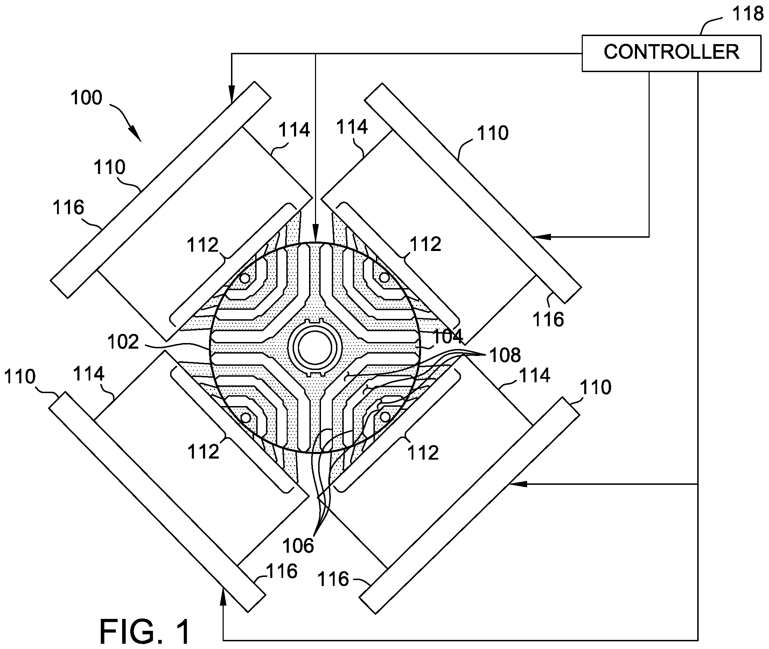

FIG. 1 is a perspective view of an example system 100. In the example embodiment, system 100 includes a mold 102 configured to receive a rotor body 104 that includes a plurality of rotor teeth 106. Rotor body 104 defines one or more rotor cavities 108 extending axially through rotor body 104. Rotor cavities 108 can be filled with a magnetic material, as described in further detail below. As shown in FIG. 1, in some embodiments, rotor teeth 106 are curvilinear and arranged in concentric groups corresponding to poles of rotor body 104. For example, FIG. 1 depicts rotor body 104 as having four rotor poles, each with group of concentric rotor teeth 106 and rotor cavities 108. In such embodiments, rotor cavities 108 are defined between pairs of concentric rotor teeth 106. In some embodiments, rotor body 104 is formed from a plurality of rotor laminations, which may be layered in an axial direction to form rotor body 104. In some such embodiments, each of the rotor laminations has substantially the same shape, and each rotor lamination is rotationally skewed relative to adjacent rotor laminations. In such embodiments, rotor cavities 108 curve relative to an axis of rotor body 104 as rotor cavities 108 pass through rotor body 104.

In the example embodiment, system 100 further includes a plurality of electromagnetic coils 110. Each electromagnetic coil 110 includes a plurality of magnetic cores 112. Each of the magnetic cores 112 is configured to align with a respective one of the rotor teeth 106. Each electromagnetic coil 110 further includes a plurality of electromagnetic windings 114. Each electromagnetic winding 114 is wound about a respective magnetic cores 112, such that when electromagnetic winding 114 is supplied with an electric current and energized, the corresponding magnetic cores 112 becomes magnetized. In embodiments in which rotor body 104 defines a plurality of rotor poles, there is one electromagnetic coil 110 present for each rotor pole, and each electromagnetic coils 110 is configured to align with a respective one of the rotor poles when rotor body 104 is placed within mold 102. A shape of magnetic cores 112 complement a shape of rotor teeth 106 to provide efficient flux transfer to rotor cavities 108. For example, magnetic cores 112 may be shaped so that, as shown in FIG. 1, any gap between respective ends of magnetic cores 112 and rotor teeth 106 is minimized when magnetic cores 112 and rotor teeth 106 are aligned. In some embodiments, electromagnetic coils 110 further include a mounting plate 116, to which magnetic cores 112 are attached.

Electromagnetic windings 114 are formed from a conductive material such as, for example, aluminum or copper, and may be formed from wires or foils. In some embodiments, electromagnetic windings 114 may include electrical insulators on their surfaces. In embodiments in which more than one winding layer is present, insulation may be applied between the layers. The insulation may include films (e.g., polyethylene terephthalate (PET), paper-based (Nomex)) and/or liquid (thermal/UV) curable resins (e.g., epoxy and acrylates). Electromagnetic windings 114 are sufficiently thick to reduce losses and temperature rise and to limit the magnetic leakage passing between magnetic cores 112. Due to high currents (and current densities), there is non-trivial magnetic potential between magnetic cores 112.

In the example embodiment, system 100 further includes a controller 118. Controller 118 is in communication with and configured to control components of system 100, such as mold 102, electromagnetic coils 110, or other components described herein. It should be understood that, in some embodiments, one or more of the functions of controller 118 described below may be performed by components other than a single controller 118 (such as that shown in FIG. 1). For example, in some embodiments, different controllers may control different parts of system 100, and/or certain functions may be performed manually and/or based on manual input from an operator. In some embodiments, electromagnetic coils 110 are electrically connected in series and use one single power supply, which may be controlled by controller 118 (e.g., integrated to hardware for controlling the injection molding ).

In the example embodiment, controller 118 is configured to close the mold 102 after rotor body 104 is positioned within mold 102. For example, controller 118 may control actuators that cause mold 102 to close. By closing mold 102, a contained space is created into which hot magnetic material melt can be injected. In some embodiments, rotor body 104 is divided into axial segments, which may each be inserted into mold 102 at separate times. Rotor body 104 is positioned within mold 102 such that each rotor pole of rotor body 104 aligns with a corresponding electromagnetic coil 110, and each rotor tooth 106 aligns with a corresponding magnetic core 112.

In the example embodiment, controller 118 is configured to, after closing the mold, inject a magnetic material into rotor cavities 108. For example, controller 118 may control injectors that cause the magnetic material to move as a fluid or liquid (e.g., molten polymer including embedded magnetic particles) into mold 102 to fill rotor cavities 108. During injection, the magnetic material (e.g., polymer and magnetic particles) fills rotor cavities 108 under a certain pressure. The temperature of the magnetic material during injection is selected depending on the plastic matrix. In some embodiments, the injection period lasts from about 0.5 to about 10 seconds. Once injected into rotor cavities 108, the magnetic material may begin to cool and eventually solidify.

In the example embodiment, after closing mold 102, controller 118 is configured to excite electromagnetic coils 110 to align the magnetic material into a desired magnetic orientation prior to solidification of the magnetic material. For example, controller 118 may cause current to be supplied to electromagnetic windings 114, thereby magnetizing magnetic cores 112, which in turn produce a magnetic field that causes the fluid magnetic material to align into the desired magnetic orientation. Electromagnetic coils 110 may be excited prior to and/or during the injection of the magnetic material.

The magnetic flux density applied to all rotor cavities 108 must be higher than magnetic field required to fully orient the magnetic particles embedded in the magnetic material. In some embodiments, the magnetic field density may be, for example, about 1.8 tesla for iron-based constructions of magnetic cores 112 or about 2.2 tesla for iron-cobalt based constructions of magnetic cores 112. While the magnetic field is applied, the magnetic particles of the magnetic material rotate, aligning their magnetization axis with the magnetic field. This occurs when a viscosity of the polymer containing the magnetic particles, which is a function of temperature, is sufficiently low (i.e., the temperature is still sufficiently high). The magnetic field required for orienting is a function of temperature due to dependencies on magneto-crystalline anisotropy constants and saturation polarization, which controls intrinsic coercivity. The magnetic field generated by electromagnetic coils 110 is determined by the direct current applied during excitation. Applying a higher current results in a stronger magnetic field. In some embodiments, electromagnetic windings 114 are configured to carry a current density of about 15 amperes per square millimeter to about 25 amperes per square millimeter. A level of required orienting magnetic field magnitude depends on the specific magnetic material that is used. Examples of materials, ordered from lowest to highest magnetic field requirement, include polymer bonded ferrite, polymer bonded Sm-Fe-N, polymer bonded Neo, polymer bonded Mn-Bi, and polymer bonded Sm-Co. For the listed magnetic materials (not limited to them), the current applied during processing should be on an order of tens to hundreds of amps, provided that a relatively low number of turns of foil are used for electromagnetic windings 114. This approach also keeps coil excitation voltage requirements relatively low (e.g., under 48 volts), providing enhanced safety compared to more conventional wire implementations.

In the example embodiment, after exciting electromagnetic coils 110, controller 118 is configured to de-energize electromagnetic coils 110. In some embodiments, controller 118 de-energizes electromagnetic coils 110 after the magnetic material has solidified. Because the magnetic material solidifies while being held in the desired magnetic orientation by electromagnetic coils 110, the magnetic material maintains the desired magnetic orientation after solidifying, even when electromagnetic coils 110 are de-energized and the resulting orienting magnetic field is removed.

In some embodiments, after solidification of the magnetic material, controller 118 is further configured to open mold 102. For example, controller 118 may control actuators that cause mold 102 to close. In some embodiments, controller 118 is further configured to cause mold to eject rotor body 104 and the solidified magnetic material contained within rotor body 104. For example, controller 118 may control actuators that push or otherwise cause rotor body 104 to move outside of mold 102. Because solidified magnetic material is contained within rotor body 104, the mechanism used to eject rotor body 104 should be sufficiently strong to overcome any magnetic forces that resist removal of rotor body 104 from mold 102.

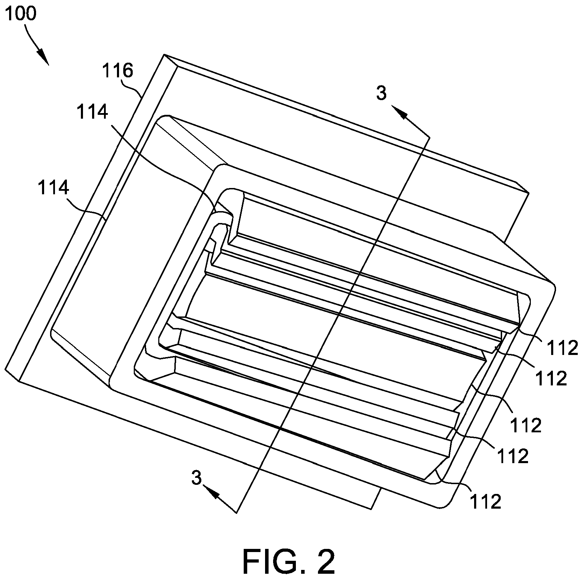

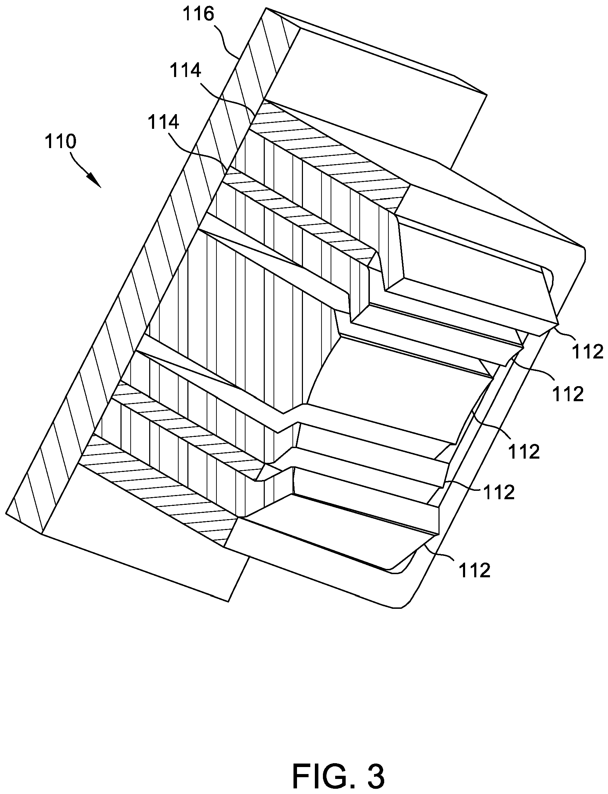

FIG. 2 is a perspective view of an example electromagnetic coil 110 including magnetic cores 112 and electromagnetic windings 114, which generally function as described with respect to FIG. 1. FIG. 3 is a cross-sectional view of electromagnetic coil 110 taken along cross-sectional line 3-3 shown in FIG. 2. In the example embodiment shown in FIGS. 2 and 3, electromagnetic coil 110 is configured to align with a rotor body 104 having a rotational skew. Accordingly, in the example embodiment, magnetic cores 112 are shaped with a curvature with respect to an axis of rotor body 104 such that an end of each magnetic core can align with a corresponding rotor tooth 106 of rotor body 104. As illustrated in FIGS. 2 and 3, a single electromagnetic winding 114 may be used to magnetize multiple magnetic cores 112. In particular, an electromagnetic winding 114 may be wound about two magnetic cores 112 that each align with a corresponding end of the same rotor tooth 106 (as shown in FIG. 1).

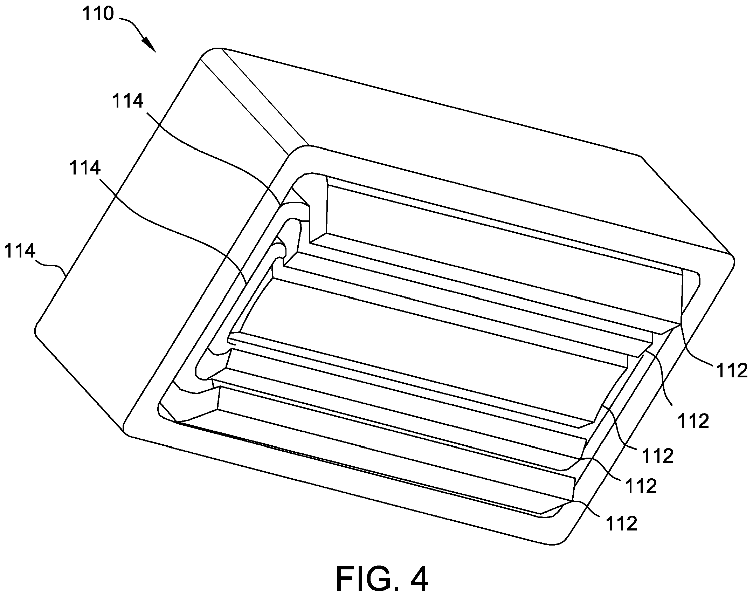

FIG. 4 is a perspective view of another example electromagnetic coil 110 including magnetic cores 112 and electromagnetic windings 114, which generally function as described with respect to FIG. 1. In the example embodiment shown in FIG. 4, electromagnetic coil 110 is configured to align with a rotor body 104 without a rotational skew. Accordingly, in the example embodiment, magnetic cores 112 are shaped to run substantially parallel to an axis of rotor body 104 such that an end of each magnetic core can align with a corresponding rotor tooth 106 of rotor body 104.

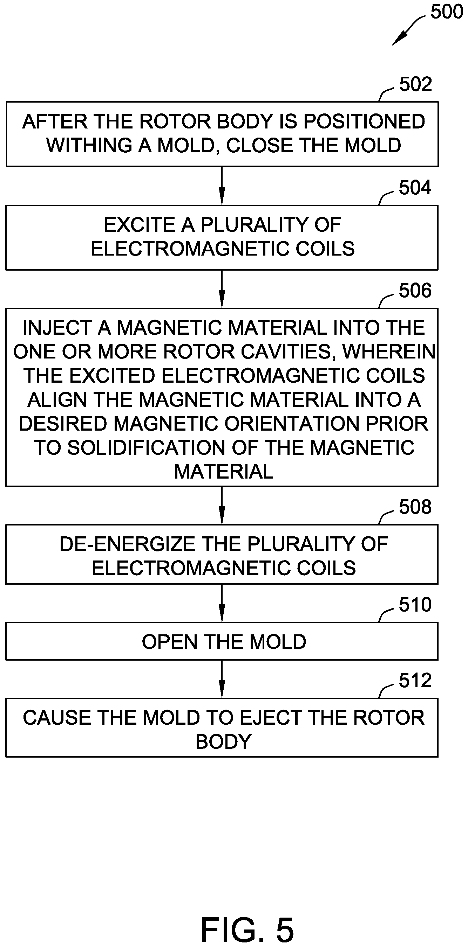

FIG. 5 is a flowchart illustrating an example method 500 for manufacturing a PM motor. In the example embodiment, method 500 is performed using a system (such as system 100) including a mold (such as mold 102) configured to receive a rotor body (such as rotor body 104) including a plurality of rotor teeth (such as rotor teeth (106) and defining one or more rotor cavities (such as rotor cavities 108) and a plurality of electromagnetic coils (such as electromagnetic coils 110) including a plurality of magnetic cores (such as magnetic cores 112), each of the plurality of magnetic cores configured to align with a respective one of the plurality of rotor teeth, and a plurality of electromagnetic windings (such as electromagnetic windings 114), wherein each of the electromagnetic windings is wound about at least one of the plurality of magnetic cores. In some embodiments, each of the steps of method 500 are performed by and/or under direction from a single controller (such as controller 118). Alternatively, in some embodiments, one or more of the steps of method 500 may be performed by separate controllers and/or manually. For example, mold 102 and its associated injection devices may be controlled by one controller, while electromagnetic coils 110 may be controlled by another controller, each executing corresponding program instructions.

In the example embodiment, method 500 includes, after the rotor body is positioned within the mold, closing 502 the mold.

In the example embodiment, method 500 further includes, after closing the mold, exciting 504 the plurality of electromagnetic coils.

In the example embodiment, method 500 further includes, after exciting the plurality of electromagnetic coils, injecting 506 a magnetic material into the one or more rotor cavities, wherein the excited electromagnetic coils align the magnetic material into a desired magnetic orientation prior to solidification of the magnetic material.

In the example embodiment, method 500 further includes, after injecting the magnetic material, de-energizing 508 the plurality of electromagnetic coils.

In some embodiments, method 500 further includes, after solidification of the magnetic material, opening 510 the mold.

In some embodiments, method 500 further includes, after opening the mold, causing the mold to eject 512 the rotor body.

In some embodiments, the electromagnetic coils are de-energized after solidification of the magnetic material.

In some embodiments, the plurality of rotor teeth are curvilinear, and at least one of the one or more rotor cavities is defined between a pair of concentric rotor teeth of the plurality of rotor teeth.

In some embodiments, the rotor body is formed from a plurality of rotor laminations. In some such embodiments, at least one rotor lamination of the plurality of rotor laminations is rotationally skewed relative to another lamination of the plurality of rotor laminations.

In some embodiments, the rotor body defines a plurality of rotor poles, and each of the plurality of electromagnetic coils is configured to align with a respective one of the plurality of rotor poles.

Example embodiments of a system and method for manufacturing PM motors are described above in detail. The systems and methods are not limited to the specific embodiments described herein but, rather, components of the systems and/or operations of the methods may be utilized independently and separately from other components and/or operations described herein. Further, the described components and/or operations may also be defined in, or used in combination with, other systems, methods, and/or devices, and are not limited to practice with only the systems described herein.

At least one technical effect of the systems and methods described herein includes (a) enabling an automated insertion of permanent magnets into a rotor by utilizing a system that includes a mold and a plurality of electromagnetic coils that can align a magnetic material injected into the mold; (b) simplification of materials needed for insertion of permanent magnets into a rotor by using a molten magnetic material; and (c) increased modularity of systems for manufacturing PM motors by utilizing a automated system that includes a mold and a plurality of electromagnetic coils that can align a magnetic material injected into the mold, in which the numbers of electromagnetic coils and properties of the injected material can be controlled to achieve desired specifications of the rotor.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Subsequently, further embodiments according to the present disclosure are described:
Embodiment 1: A system for manufacturing a rotor for a permanent magnet (PM) motor, the system comprising:
   a mold configured to receive a rotor body including a plurality of rotor teeth and defining one or more rotor cavities;
   a plurality of electromagnetic coils comprising:
      a plurality of magnetic cores, each of the plurality of magnetic cores configured to align with a respective one of the plurality of rotor teeth; and
      a plurality of electromagnetic windings, wherein each of the electromagnetic windings is wound about at least one of the plurality of magnetic cores; and
      a controller configured to:
         after the rotor body is positioned within the mold, close the mold;
         after closing the mold, excite the plurality of electromagnetic coils;
         after exciting the plurality of electromagnetic coils, inject a magnetic material into the one or more rotor cavities, wherein the excited electromagnetic coils align the magnetic material into a desired magnetic orientation prior to solidification of the magnetic material; and
         after injecting the magnetic material, de-energize the plurality of electromagnetic coils.
Embodiment 2: The system of Embodiment 1, wherein the controller is further configured to, after solidification of the magnetic material, open the mold. Embodiment 3: The system of Embodiment 2, wherein the controller is further configured to, after opening the mold, cause the mold to eject the rotor body.
Embodiment 4: The system of Embodiment 1, wherein the electromagnetic coils are de-energized after solidification of the magnetic material.
Embodiment 5: The system of Embodiment 1, wherein the plurality of rotor teeth are curvilinear, and wherein at least one of the one or more rotor cavities is defined between a pair of concentric rotor teeth of the plurality of rotor teeth.
Embodiment 6: The system of Embodiment 1, wherein the rotor body is formed from a plurality of rotor laminations.
Embodiment 7: The system of Embodiment 6, wherein at least one rotor lamination of the plurality of rotor laminations is rotationally skewed relative to another lamination of the plurality of rotor laminations.
Embodiment 8: The system of Embodiment 1, wherein the rotor body defines a plurality of rotor poles, and wherein each of the plurality of electromagnetic coils is configured to align with a respective one of the plurality of rotor poles.
Embodiment 9: A method for manufacturing a rotor for a permanent magnet (PM) motor using a system including a mold configured to receive a rotor body including a plurality of rotor teeth and defining one or more rotor cavities and a plurality of electromagnetic coils including a plurality of magnetic cores, each of the plurality of magnetic cores configured to align with a respective one of the plurality of rotor teeth, and a plurality of electromagnetic windings, wherein each of the electromagnetic windings is wound about at least one of the plurality of magnetic cores, the method comprising:
   after the rotor body is positioned within the mold, closing the mold;
   after closing the mold, exciting the plurality of electromagnetic coils;
   after exciting the plurality of electromagnetic coils, injecting a magnetic material into the one or more rotor cavities, wherein the excited electromagnetic coils align the magnetic material into a desired magnetic orientation prior to solidification of the magnetic material; and
   after injecting the magnetic material, de-energizing the plurality of electromagnetic coils.
Embodiment 10: The method of Embodiment 9, further comprising, after solidification of the magnetic material, opening the mold.
Embodiment 11: The method of Embodiment 10, further comprising, after opening the mold, causing the mold to eject the rotor body.
Embodiment 12: The method of Embodiment 9, wherein the electromagnetic coils are de-energized after solidification of the magnetic material.
Embodiment 13: The method of Embodiment 9, wherein the plurality of rotor teeth are curvilinear, and wherein at least one of the one or more rotor cavities is defined between a pair of concentric rotor teeth of the plurality of rotor teeth.
Embodiment 14: The method of Embodiment 9, wherein the rotor body is formed from a plurality of rotor laminations.
Embodiment 15: The method of Embodiment 14, wherein at least one rotor lamination of the plurality of rotor laminations is rotationally skewed relative to another lamination of the plurality of rotor laminations.
Embodiment 16: The method of Embodiment 9, wherein the rotor body defines a plurality of rotor poles, and wherein each of the plurality of electromagnetic coils is configured to align with a respective one of the plurality of rotor poles.
Embodiment 17: A controller for manufacturing a rotor for a permanent magnet (PM) motor, the controller in communication with a mold configured to receive a rotor body including a plurality of rotor teeth and defining one or more rotor cavities and a plurality of electromagnetic coils including a plurality of magnetic cores, each of the plurality of magnetic cores configured to align with a respective one of the plurality of rotor teeth, and a plurality of electromagnetic windings, wherein each of the electromagnetic windings is wound about at least one of the plurality of magnetic cores, the controller configured to:
   after the rotor body is positioned within the mold, close the mold;
   after closing the mold, excite the plurality of electromagnetic coils;
   after exciting the plurality of electromagnetic coils, inject a magnetic material into the one or more rotor cavities, wherein the excited electromagnetic coils align the magnetic material into a desired magnetic orientation prior to solidification of the magnetic material; and
   after injecting the magnetic material, de-energize the plurality of electromagnetic coils.
Embodiment 18: The controller of Embodiment 17, wherein the controller is further configured to, after solidification of the magnetic material, open the mold.
Embodiment 19: The controller of Embodiment 18, wherein the controller is further configured to, after opening the mold, cause the mold to eject the rotor body.
Embodiment 20: The controller of Embodiment 17, wherein the electromagnetic coils are de-energized after solidification of the magnetic material.

## Claims

1. A system (100) for manufacturing a rotor for a permanent magnet (PM) motor, the system comprising:
a mold (102) configured to receive a rotor body (104) including a plurality of rotor teeth (106) and defining one or more rotor cavities (108);
a plurality of electromagnetic coils (110) comprising:
a plurality of magnetic cores (112), each of the plurality of magnetic cores configured to align with a respective one of the plurality of rotor teeth; and
a plurality of electromagnetic windings (114), wherein each of the electromagnetic windings is wound about at least one of the plurality of magnetic cores; and
a controller (118) configured to:
after the rotor body is positioned within the mold, close the mold;
after closing the mold, excite the plurality of electromagnetic coils;
after exciting the plurality of electromagnetic coils, inject a magnetic material into the one or more rotor cavities, wherein the excited electromagnetic coils align the magnetic material into a desired magnetic orientation prior to solidification of the magnetic material; and
after injecting the magnetic material, de-energize the plurality of electromagnetic coils.

2. The system of Claim 1, wherein the controller is further configured to, after solidification of the magnetic material, open the mold.

3. The system of Claim 1 or 2, wherein the controller is further configured to, after opening the mold, cause the mold to eject the rotor body.

4. The system of any one of Claims 1 to 3, wherein the electromagnetic coils are de-energized after solidification of the magnetic material.

5. The system of any one of Claims 1 to 4, wherein the plurality of rotor teeth are curvilinear, and wherein at least one of the one or more rotor cavities is defined between a pair of concentric rotor teeth (106) of the plurality of rotor teeth.

6. The system of any one of Claims 1 to 5, wherein the rotor body is formed from a plurality of rotor laminations.

7. The system of Claim 6, wherein at least one rotor lamination of the plurality of rotor laminations is rotationally skewed relative to another lamination of the plurality of rotor laminations.

8. The system of any one of Claims 1 to 7, wherein the rotor body defines a plurality of rotor poles, and wherein each of the plurality of electromagnetic coils is configured to align with a respective one of the plurality of rotor poles.

9. A method (500) for manufacturing a rotor for a permanent magnet (PM) motor using a system (100) including a mold (102) configured to receive a rotor body (104) including a plurality of rotor teeth (106) and defining one or more rotor cavities (108) and a plurality of electromagnetic coils (110) including a plurality of magnetic cores (112), each of the plurality of magnetic cores configured to align with a respective one of the plurality of rotor teeth, and a plurality of electromagnetic windings (114), wherein each of the electromagnetic windings is wound about at least one of the plurality of magnetic cores, the method comprising:
after the rotor body is positioned within the mold, closing the mold (502);
after closing the mold, exciting (504) the plurality of electromagnetic coils;
after exciting the plurality of electromagnetic coils, injecting (506) a magnetic material into the one or more rotor cavities, wherein the excited electromagnetic coils align the magnetic material into a desired magnetic orientation prior to solidification of the magnetic material; and
after injecting the magnetic material, de-energizing (508) the plurality of electromagnetic coils.

10. The method of Claim 9, further comprising, after solidification of the magnetic material, opening (510) the mold.

11. The method of Claim 10, further comprising, after opening the mold, causing the mold to eject (512) the rotor body.

12. The method of any one of Claims 9 to 11, wherein the electromagnetic coils are de-energized after solidification of the magnetic material.

13. The method of any one of Claims 9 to 12, wherein the plurality of rotor teeth are curvilinear, and wherein at least one of the one or more rotor cavities is defined between a pair of concentric rotor teeth (106) of the plurality of rotor teeth.

14. The method of any one of Claims 9 to 13, wherein the rotor body is formed from a plurality of rotor laminations, and preferably,
wherein at least one rotor lamination of the plurality of rotor laminations is rotationally skewed relative to another lamination of the plurality of rotor laminations.

15. The method of any one of Claims 9 to 14, wherein the rotor body defines a plurality of rotor poles, and wherein each of the plurality of electromagnetic coils is configured to align with a respective one of the plurality of rotor poles.
